# EUROPÄISCHE PATENTSCHRIFT

(11) **EP 2 457 316 B1**
(45) Veröffentlichungstag und Bekanntmachung des Hinweises auf die Patenterteilung: **18.01.2017**
(21) Anmeldenummer: 10729894.5
(22) Anmeldetag: 08.07.2010
(51) Int. Cl.: H02M 3/158, H02M 1/42, H02M 1/00

(54) **VERFAHREN UND SCHALTUNG ZUR ANSTEUERUNG EINES HOCHSETZSTELLERS IN EINER SCHALTUNG ZUR LEISTUNGSFAKTOR-KORREKTUR**
METHOD AND DEVICE TO CONTROL A BOOST CONVERTER FOR A PFC CIRCUIT
PROCÉDÉ ET DISPOSITIF POUR LE CONTROL D'UN CONVERTISSEUR ÉLÉVATEUR DANS UN CIRCUIT SURVOLTEUR À CORRECTION DE FACTEUR DE PUISSANCE

(30) Priorität: 23.07.2009 DE 102009034351; 23.02.2010 DE 102010002226
(43) Veröffentlichungstag der Anmeldung: 30.05.2012
(73) Patentinhaber: Tridonic GmbH & Co KG, 6851 Dornbirn (AT)
(72) Erfinder: MARENT, Günter, A-6780 Bartholomäberg (AT)
(74) Vertreter: Rupp, Christian
(86) Internationale Anmeldenummer: PCT/EP2010/059791
(87) Internationale Veröffentlichungsnummer: WO 2011/009733

(56) Entgegenhaltungen:
- EP-A1- 1 603 219
- WO-A1-2005/083872
- DE-A1-102006 018 576

## Beschreibung

Die vorliegende Erfindung bezieht sich auf ein Verfahren sowie eine Vorrichtung zur aktiven Leistungsfaktorkorrektur (PFC, Power Factor Correction), d.h. mittels eines aktiv von einer Steuereinheit getakteten Schalters.

Das technische Gebiet der vorliegenden Erfindung ist insbesondere das der Leistungsfaktorkorrektur bei Wechselspannungs-/Gleichspannungs-Leistungswandler.

Leistungsfaktorkorrektur beeinflusst die Art, wie elektrische Geräte Strom dem Stromnetz entnehmen. Die Netzwechselspannung weist bekanntlich einen sinusförmigen Zeitverlauf auf. Idealerweise sollte daher auch der vom Netz entnommene Strom ebenfalls einen sinusförmigen Zeitverlauf aufweisen. Dieser Idealfall kommt aber nicht immer vor, vielmehr kann der Strom sogar erheblich von einer Sinus-Hüllkurve abweichen. Falls der entnommene Strom nicht sinusförmig ist, werden indessen Oberwellen im Netzstrom erzeugt. Diese Oberwellenströme im Versorgungsnetz sollen mit Hilfe einer Leistungsfaktorkorrektur-Schaltung verringert werden.

Nach der DE 10 2004 025 597 A1 ist eine Schaltung zur eine Leistungsfaktor bekannt, welche aufweist
eine Induktivität, die von einer gleichgerichteten Netzspannung gespeist wird,
einen getakteten Schalter, mittels welchem die Induktivität durch wiederholtes Schließen und Öffnen desselben auf- und entmagnetisiert wird,
eine Diode, mittels welcher der Entladestrom der Induktivität dem Ausgang der Schaltung zugeführt wird, eine Steuereinheit mit einem Überwachungs-PIN und einem Steuer-Pin, wobei letzterer Steuersignale an den Schalter ausgibt,
und einem zu dem Schalter parallel geschalteten Spannungsteiler, dessen Mittenabgriff mit dem Überwachungs-Pin verbunden ist.

Die von der bekannten Schaltung erzeugte Ausgangsgleichspannung wird konstant gehalten, indem die Steuereinheit - bei geöffnetem Schalter - die dem Überwachungs-PIN als Istwert zugeführte Spannung mit einem Sollwert vergleicht und entsprechend dem Vergleichsergebnis die Einschaltzeit des Schalters entweder verlängert oder verkürzt. Die dem Überwachungs-Pin von dem Mittenabgriff des Spannungsteilers zugeführte Spannung ist gleich der um den Spannungsabfall über der leitenden Diode reduzierten Ausgangsgleichspannung der Schaltung.

Die Information, wann der geschlossene Schalter wieder eingeschaltet werden muss, entnimmt die bekannte Steuereinheit ebenfalls der dem Überwachungs-PIN von dem Spannungsteiler zugeführten Spannung, und zwar dann, wenn diese Spannung nach unten abknickt. Dieses Abknicken ist eine Folge dessen, dass der Entladestrom durch die Induktivität die Nulllinie erreicht hat und dass die Diode wieder in den nichtleitenden Zustand übergeht.

Im Ergebnis ist bezüglich der bekannten Schaltung festzustellen, dass die dem Überwachungs-Pin zugeführten Informationen bezüglich der überwachten Parameter, nämlich das Erreichen des Nulldurchganges durch den Entladestrom der Induktivität einerseits und der Istwert der Ausgangsgleichspannung andererseits nur indirekt vorliegen. Das hat zur Folge, dass mit der bekannten Schaltung ein störungsfreier Betrieb unter besonderen - außerhalb der Norm liegenden - Bedingungen, wie beispielsweise ein Überstrom durch den Schalter, ein extremer Lastwechsel oder ein Abfallen der Netzspannung, nicht immer gewährleistet werden kann. Weiter sind bekannt die Dokumente DE 10 2006 018 576 A1 und EP 1 603 219 A1.

Der Erfindung liegt deshalb die Aufgabe zugrunde, ein Verfahren und eine Schaltung zur Leistungsfaktor-Korrektur anzugeben, die die vorstehend genannten Nachteile vermeidet, ohne dass weitere Überwachungs-Pins zwingend erforderlich sind.

Gemäss einem ersten Aspekt schlägt die Erfindung ein Verfahren zur Leistungsfaktorkorrektur für einen Wechselspannungs-/ Gleichspannungs-Wandler nach Anspruch 1 vor, bei dem eine Gleichspannung oder gleichgerichtete Eingangswechselspannung eine Induktivität speist,
die Induktivität wiederholt mittels eines durch eine Steuereinheit getakteten Schalters durch Schließen und Öffnen desselben auf- und entmagnetisiert wird, und
der Entladestrom der Induktivität über eine Diode einem Ausgang zugeführt wird,
wobei an einem gemeinsamen, mit der Steuereinheit verbundenen Messpunkt direkt oder indirekt gemessen werden:
- bei geöffnetem Schalter, die Spannung am Ausgang (und der Zeitpunkt des Erreichens der Nulllinie des Entladestroms der Induktivität, und
- bei geschlossenem Schalter, der durch den Schalter fließende Strom.
Weitere Messpunkte können für andere Rückführgrössen, bspw. die Eingangsspannung vorgesehen sein.

Der gemeinsame Messpunkt ist über wenigstens einen Widerstand mit einem Abgriffspunkt verbunden, der zwischen der Induktivität und der Diode liegt und ist mit wenigstens einem weiteren Widerstand mit einem weiteren Abgriffspunkt verbunden, der auf der Ausgangsseite der Diode liegt.

Dem Schalterstrom wird bei geschlossenem Schalter an dem gemeinsamen Messpunkt die Ausgangsgleichspannung überlagert.

Bei geschlossenem Schalter wird der durch diesen fließende Strom durch die Steuereinheit zur Bestimmung des Ausschaltzeitpunkts und/oder zur Überstromerfassung ausgewertet.

Ein weiterer Aspekt der Erfindung betrifft eine Leistungsfaktorkorrektur-Schaltung für einen Wechselspannungs-/Gleichspannungs-Wandler nach Anspruch 9, bei dem eine Gleichspannung oder gleichgerichtete Eingangswechselspannung eine Induktivität speist,
die Induktivität wiederholt mittels eines durch eine Steuereinheit getakteten Schalters durch Schließen und Öffnen desselben auf- und entmagnetisiert wird, und der Entladestrom der Induktivität über eine Diode dem Ausgang des Wandlers zugeführt wird,
wobei bei geöffnetem Schalter an einem gemeinsamen, mit der Steuereinheit verbundenen Messpunkt die Spannung am Ausgang und der Zeitpunkt des Erreichens der Nulllinie des Entladestroms der Induktivität direkt oder indirekt gemessen werden, und
wobei
der gemeinsame Messpunkt über wenigstens einen Widerstand mit einem Abgriffspunkt verbunden ist, der zwischen der Induktivität und der Diode liegt und wobei der gemeinsame Messpunkt mit wengistens einem weiteren Widerstand mit einem weiteren Abgriffspunkt verbunden ist, der auf der Ausgangsseite der Diode liegt.

Der Zeitpunkt des Einschaltens des Schalters (S) kann zeitlich nach dem Zeitpunkt des Erreichens der Nulllinie durch den Entladestrom liegen.

Zur Feststellung des Zeitpunkts des Erreichens der Nulllinie des Entladestromes der Induktivität bei geöffnetem Schalter kann eine signifikante Änderung des Signals an dem gemeinsamen Messpunkt ausgewertet werden.

Die Eingangspannung kann aufgrund der überwachten und gemessenen Parameter sowie der Ein- und/oder Ausschaltzeiten des Schalters rechnerisch ermittelt oder an einem weiteren Messpunkt erfasst werden, der ebenfalls mit der Steuereinheit verbunden ist.

Die Messung der Ausgangsgleichspannung kann im sog. "shutdown-with-burst"-Modus erfolgen, bei dem die Einschaltzeit für den Schalter so kurz und die Ausschaltzeit so lang wie möglich gewählt werden, so dass praktisch kein Energietransport erfolgt.

Die Erfindung betrifft weiterhin eine Integrierte Schaltung, insbesondere ASIC, Mikrokontroller oder Hybridtechnik, die zur Ausführung eines solchen Verfahrens nach einem der vorhergehenden Ansprüche ausgelegt ist.

Die Erfindung betrifft auch ein Betriebsgerät für Leuchtmittel, aufweisend eine derartige Schaltung, sowie eine Leuchte, aufweisend ein derartiges Betriebsgerät sowie ein oder mehrere angeschlossene Leuchtmittel, wie Gasentladungslampen, LEDs oder OLEDs.

Ein Ausführungsbeispiel wird nachfolgend anhand der Zeichnungen beschrieben.

Es zeigen:
- Figur 1: ein schematisiertes Schaltbild einer Schaltung zur Leistungsfaktor-Korrektur in einem Wechselspannungs-/Gleichspannungs-Leistungswandler,
- Figuren 2 (a) - (c): Diagramme mit von der Zeit abhängigen Betriebsparametern der Schaltung gemäß Figur 1,
- Fig. 3: zeigt im Detail Signalverläufe in der Phase, in der ein Schalter S geschlossen ist und eine Induktivität L aufmagnetisiert wird, und
- Fig. 4: zeigt im Detail Signalverläufe in der Phase nachdem die Induktivität L entmagnetisiert ist und die Diode D in den nicht-leitenden Zustand gewechselt, also gesperrt hat.

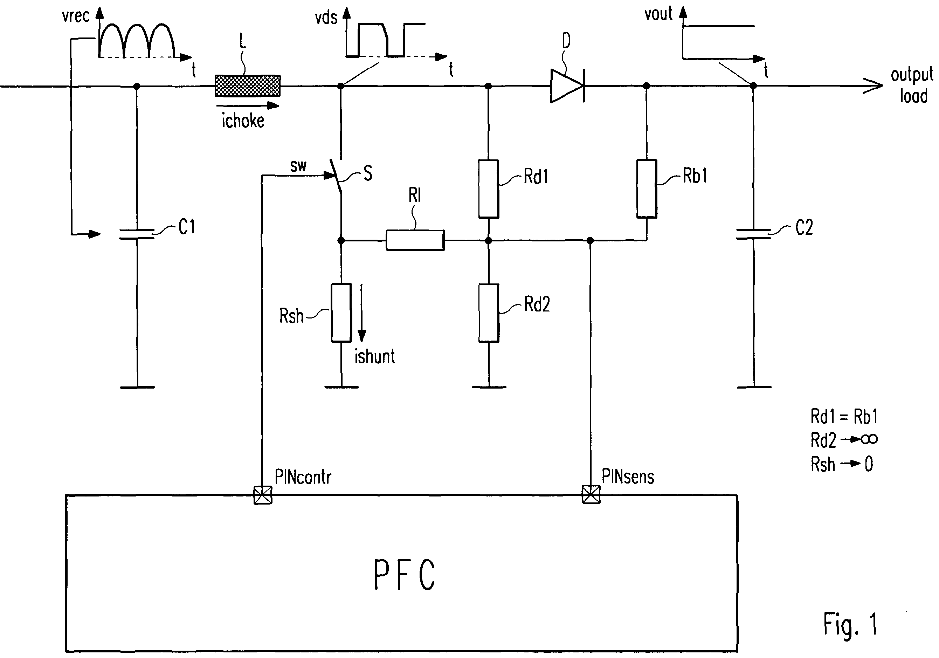

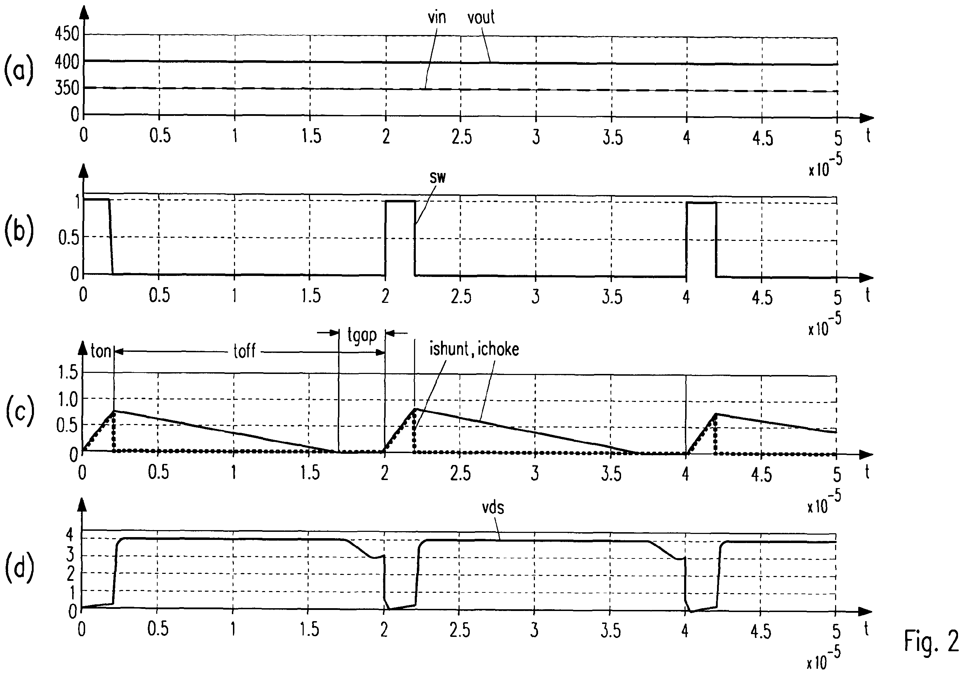

Über dem Eingang der Schaltung nach Figur 1 liegt in einem ersten Querzweig zwischen einem Hochpotential-Eingangsanschluss und Masse ein erster Glättungskondensator C1, dem eine gleichgerichtete Wechselspannung vrec zugeführt wird. Die gleichgerichtete Wechselspannung vrec wird durch Gleichrichtung der Netzspannung erzeugt und besteht dementsprechend aus Sinushalbwellen gleicher Polarität. Der Glättungskondensator C1 glättet die Eingangs-Wechselspannung vrec - idealerweise - so, dass daraus eine für einen Zeitraum von mehreren Schaltzyklen des Schalters S nahezu konstante Eingangsgleichspannung vin entsteht, die in Figur 2(a) als gestrichelte Linie dargestellt ist. Die für einen Zeitraum nahezu konstante Eingangsgleichspannung ergibt sich dadurch, dass sich die Eingangs-Wechselspannung vrec mit einer im Verhältnis zur Schaltfrequenz des Schalters S sehr niedrigen Frequenz ändert.

### (Zusätzlich kann auch eine DC-Versorgungsspannung bspw. ausgehend von einem Akkumulator oder einer Batterie bereitgestellt werden, wie es insbesondere bei Notlichtgeräten der Fall ist.)

Auf den Glättungskondensator C1 folgen im Längszweig der Schaltung eine Induktivität L und eine Diode D. Zwischen dem Verbindungspunkt der Induktivität L und der Diode D einerseits und Masse andererseits erstreckt sich ein zweiter Querzweig, der von einem H-förmigen Netzwerk gebildet ist. Der erste H-Schenkel besteht aus der Serienschaltung eines elektronischen Schalters (vorzugsweise eines FETs) und eines Shunt-Widerstandes Rsh. Der zweite H-Schenkel besteht aus einem von zwei Widerständen Rd1 und Rd2 gebildeten Spannungsteiler. Der Querschenkel ist von einem Verbindungswiderstand RI gebildet.

Nach der Diode D folgt ein dritter Querzweig, der einen zweiten Glättungskondensator C2 für die Ausgangsgleichspannung vout enthält, welcher sich von einem Hochpotential-Ausgangsanschluss nach Masse erstreckt. Die Ausgangsgleichspannung vout ist in Figur 2(a) als durchgehende Linie dargstellt. Man erkennt, dass die Ausgangsgleichspannung vout höher als die Eingangsgleichspannung vin ist. Ferner liegt zwischen dem Hochpotential-Ausgangsanschluss und dem Mittenabgriff des Spannungsteilers Rd1/Rd2 ein Koppelwiderstand Rb1.

Zu der Schaltung nach Figur 1 gehört ferner eine Steuereinheit PFC, die vorzugsweise als analog oder digital arbeitende integrierte Schaltung, d.h. als ASIC, Mikrokontroller etc. ausgeführt oder selbst Teil eines solchen ICs sein kann, welcher auch die vorstehend beschriebenen Schaltungsteile umfasst.

Die Steuereinheit PFC hat nur einen Überwachungs-Pin, nämlich den Pinₛₑₙₛ, für die Erfassung der drei Parameter Nulldurchgang des Entladestroms, Schalterstrom und Ausgangsspannung ("Busspannung"). Für andere Parameter, wie bspw. die Versorgungsspannung, können ein oder mehrere weitere Überwachungs-Pins vorgesehen sein. Die Eingangsspannung kann aber auch kalkulatorisch und somit aus anderen Grössen berechnet werden.

Pinₛₑₙₛ ist mit dem Mittenabgriff des Spannungsteilers Rd1/Rd2 sowie über den Koppelwiderstand Rb1 mit dem Hochpotential-Ausgangsanschluss verbunden. Von PINcontr aus werden dem Schalter S Schaltsignale sw zugeführt, die von der Steuereinheit PFC erzeugt worden sind. Vorzugsweise haben die beiden Widerstände Rd1 und auch Rb1 einen höheren Widerstand als der Widerstand Rd2, damit die Spannung am Pinₛₑₙₛ auf einen relativ kleinen Wert herabgesetzt werden kann (verglichen mit der Eingangsspannung vin und der Ausgangsspannung vout). Somit ist der Einsatz einer Niedervolttechnologie zur Fertigung der Steuereinheit PFC möglich.

Aufgabe der Schaltung nach Figur 1 ist es, dem Netz einen Strom zu entnehmen, dessen Einhüllende weitgehend sinusförmig ist, und ferner aus der gleichgerichteten Netzspannung vin eine möglichst konstante, d.h. lastungsunabhängige Ausgangsgleichspannung vout zu erzeugen. Dazu wird der Schalter in ständiger Wiederholung ein- und ausgeschaltet. Die Einschaltimpulse sind in Figur 2(b) dargestellt. Die Einschaltzeit ist in Figur 2(c) mit ton und die Ausschaltzeit mit toff bezeichnet.

Figur 2(a) zeigt für den Ausschnitt zweier Schaltperioden die Ausgangsspannung vout und die während dieser Zeitperiode nahezu konstante Eingangsspannung vin.

Figur 2(c) zeigt in durchgezogener Linie den durch die Induktivität L fließenden Strom ichoke sowie in gepunkteter Linie den durch den Schalter S fließenden Strom ishunt. Solange der Schalter S geschlossen ist, steigt der durch die Induktivität L fließende Strom ichoke etwa linear an. Gleiches gilt für den durch den Schalter S fließenden Strom ishunt. Solange der Schalter S geschlossen ist, ist die Diode D nicht-leitend, also hochohmig. Wenn der Schalter geöffnet wird, bricht der durch den Schalter fließende Strom ishunt abrupt ab, während der durch die Induktivität L fließende Strom ichoke infolge der magnetischen Entladung kontinuierlich zu sinken beginnt, aber durch die Induktivität noch eine Zeit lang weitergetrieben wird. Sobald der Schalter S geöffnet wird, wird die Diode D leitend, also niederohmig.

Der Zeitpunkt des Öffnens des Schalters S bestimmt also den Pegel der konstant zuhaltenden Ausgangsgleichspannung vout. Es versteht sich, dass dieser nicht beliebig hoch getrieben werden kann, sondern durch den Pegel der Eingangsgleichspannung vin und den Induktivitätswert der Induktivität L begrenzt ist. Abgesehen von dieser Begrenzung gilt: Je höher der Pegel der Ausgangsgleichspannung vout sein soll, umso länger muss auch die Einschaltzeit ton des Schalters S gegenüber der Ausschaltzeit toff sein.

Das Wiedereinschalten des Schalters S am Ende einer Entladephase erfolgt - mit einer Verzögerungszeit tgap - dann, wenn der Entladestrom die Nulllinie erreicht hat (d.h. wenn die Induktivität L entmagnetisiert ist). Der Schalter S wird bei der Betriebsart "critical conduction mode" (Grenzbetrieb zwischen lückendem und nichtlückendem Strombetrieb) oder "discontinous conduction mode" (lückender Strombetrieb) frühestens wieder eingeschaltet, wenn der Entladestrom die Nulllinie kreuzt (cross over) bzw. die Polarität wechselt. Das ist dadurch erkennbar, dass die Messspannung vds (siehe Figur 1) über dem geöffneten Schalter S nach unten abknickt. Man erkennt dies auch in Figur 2(d). Wenn dieser kritische Moment erreicht ist, beginnt auch die Diode D wieder vom leitenden in den nicht-leitenden, also hochohmigen Zustand überzugehen.

An dem Schaltungspunkt Pinₛₑₙₛ liegt ein Mischsignal an, dass sich durch Überlagerung
a1) Spannung über dem Widerstand Rsh,
a2) Schalterspannung vds an der Hochpotentialseite des Schalters S und
a3) der Ausgangsgleichspannung vout am Ausgang der Schaltung
ergibt.

Dieses Mischsignal ändert sich von Phase zu Phase, weil sich die Teilsignale ändern.

### Zu a1)

Über dem Widerstand Rsh fällt nur bei geschlossenem Schalter eine (signifikante) Spannung ab, die dann dem Ladestrom ichoke der Induktivität L entspricht. Da der Ladestrom ichoke bei geschlossenem Schalter S kontinuierlich ansteigt, steigt auch die Spannung des Mischsignales entsprechend an (ichoke entspricht dem Strom ishunt). Die Steuereinheit PFC wertet dieses Ansteigen aus, um den Schalter S zu öffnen, wenn der Ladestrom ishunt den von der Steuerschaltung berechneten bzw. vorgegebenen Grenzwert erreicht hat.

### Zu a2)

Wenn der Schalter S geschlossen ist, ist die Diode D nicht-leitend, also hochohmig. Die Schalterspannung vds ist in dieser Phase mit der Spannung über Rsh identisch, da der geschlossene Schalter S die Serienschaltung Rd1//Rd2 (und auch Rd1//RI) überbrückt. Wenn der Schalter S geöffnet und die Diode D leitend wird, so stimmt die Schalterspannung vds weitgehend mit der Ausgangsgleichspannung vout (bis auf den geringen Spannungsabfall über der leitenden Diode D) überein. In jedem Fall tritt bei der Schalterspannung vds bei geöffnetem Schalter und dementsprechend abnehmendem Entladestrom ichoke am Ende der Öffungszeit toff ein Spannungsknick auf, der für die Steuereinheit PFC das Signal dafür ist, dass der Entladestrom ichoke die Nulllinie erreicht hat und dass der Schalter S nunmehr wieder eingeschaltet werden muss.

### Zu a3)

Wenn der Schalter S geschlossen und die Diode nicht-leitend, also hochohmig ist, trennt der hohe Widerstand der Diode D die beiden Widerstände Rd1 und Rb1 auf der Hochpotentialseite mit der Folge, dass ein größerer Anteil der Ausgangsgleichspannung vout an PINsens anliegt (da nur an Rb1//Rd2 eine Spannung anliegt), als dann, wenn der Schalter S geöffnet ist. In diesem Fall (also nach dem Öffnen des Schalters S) werden die beiden Widerstände Rd1 und Rb1 quasi parallel geschaltet, weil die Diode dann leitend, also niederohmig ist. Das Umschalten der Diode vom leitenden in den nicht-leitenden Zustand (bei der Entmagnetisierung der Induktivität L) hat zur Folge, dass der Anteil der Ausgangsgleichspannung vout an PINsens sprunghaft abfällt. Dieses sprunghafte Abfallen der Spannung verstärkt den bereits vorstehend beschriebenen Effekt des Abknickens der Schalterspannung vds und erleichtert daher die Bestimmung des Zeitpunktes, an dem der Schalter S wieder eingeschaltet werden muss. Ab dem Zeitpunkt, an dem die Diode D nicht-leitend wird (im Zeitraum tgap), folgt das Mischsignal wegen des hohen Anteils der Ausgangsgleichspannung vout weitgehend deren Schwankungen und kann daher von der der Steuereinheit PFC als Istwertsignal für die Regelung der Ausgangsgleichspannung ausgewertet werden, um durch einen Vergleich mit einem Sollwert einen Stellwert in Form des Grenzwertes für den Ladestrom ishunt zu gewinnen.

Bei einem Betrieb des PFC in der Betriebsart "critical conduction mode" (Grenzbetrieb zwischen lückendem und nichtlückendem Strombetrieb) oder "discontinous conduction mode" (lückender Strombetrieb) kann eine Erfassung der Ausgangsgleichspannung auch kurzzeitig nach dem Wiedereinschalten des Schalters S erfolgen. Ab dem Zeitpunkt, ab dem der Schalter S wieder eingeschaltet ist, beginnt der Strom durch den Schalter S von Null an zu steigen und das Mischsignal weist einen sehr hohen Anteil der Ausgangsgleichspannung vout auf. Das Mischsignal kann daher in diesem Zeitraum von der der Steuereinheit PFC als Istwertsignal für die Regelung der Ausgangsgleichspannung ausgewertet werden, um durch einen Vergleich mit einem Sollwert einen Stellwert in Form des Grenzwertes für den Ladestrom ishunt zu gewinnen. Da im Einschaltmoment des Schalters S bzw. kurz danach eine kurze Stromspitze aufgrund der Entladung von parasitären Kapazitäten in der Schaltung entstehen kann, ist es vorteilhaft, wenn diese Erfassung der Ausgangsgleichspannung kurz nach dem Abklingen dieser Stromspitze erfolgt, insbesondere kann eine vorgegebene Ausblendzeit nach dem Einschalten des Schalters S abgewartet werden, bevor die Erfassung des Mischsignals zur Bestimmung der Ausgangsgleichspannung erfolgt.

Die Widerstandswerte der beiden Widerstände Rb1 und Rd1 werden vorzugsweise gleich groß gewählt. Der beschriebene Effekt ist in diesem Fall am größten, weil der Gesamtwiderstand der quasi parallel geschalteten Widerstände Rb1 und Rd1 dann gerade halb so groß wie jeder einzelne Widerstandswert ist.

Der niederohmige Messwiderstand (Shunt) Rsh sollte möglichst klein gewählt werden, um den infolge des durch ihn fließenden Stromes ishunt unvermeidlichen Leistungsverlust möglichst klein zu halten.

Für die grundsätzliche Funktion der Schaltung ist der Koppelwiderstand Rb1 nicht zwingend notwendig. Sein Widerstandswert kann (gegebenenfalls) entweder sehr hoch gewählt werden oder er kann gegebenenfalls völlig weggelassen werden.

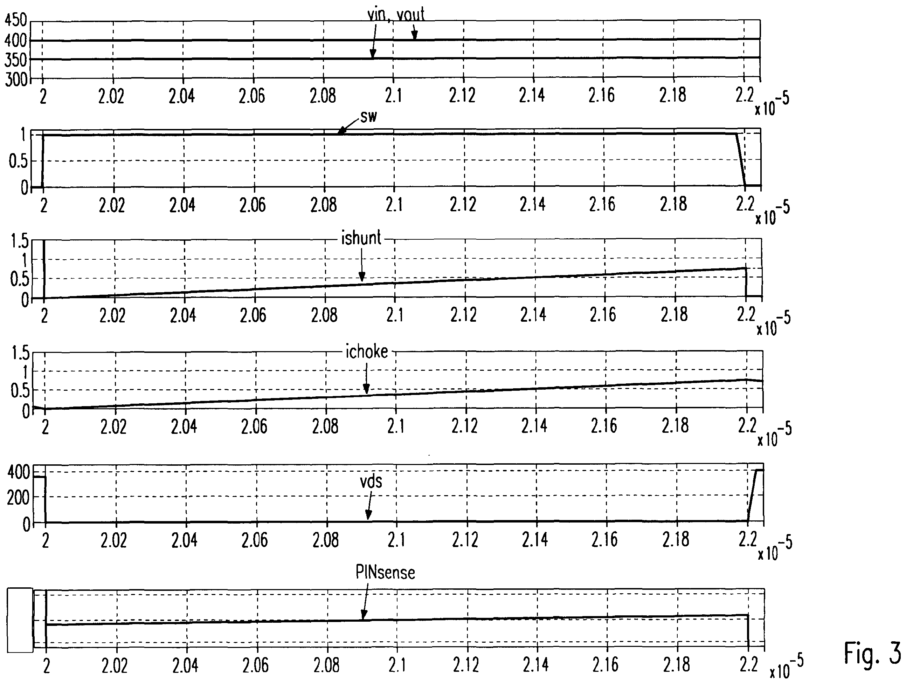

Die Figur 3 zeigt im Detail die Signalverläufe in der Phase, in der der Schalter S geschlossen ist und die Induktivität L aufmagnetisiert wird. Die Diode D ist im nicht-leitenden Zustand, also gesperrt. In dieser Phase fließt ein ansteigender Strom durch die Induktivität L, diese wird aufmagnetisiert und somit wird in ihr Energie zwischengespeichert. Der Ladestrom zum Aufmagnetisieren der Induktivität L fließt auch durch den Widerstand Rsh und es fällt somit eine Spannung über diesem Widerstand Rsh ab. Die Spannung über dem Spannungsteiler Rd1//Rd2 ist in dieser Phase relativ gering, da der Schalter S geschlossen ist und somit die Spannung vds auf ein geringes Potential herabzieht. Daher wird das Mischsignal am Schaltungspunkt PINsens während dieser Phase nicht durch die Spannung über dem Widerstand Rd1 beeinflußt. Über dem Spannungsteiler Rb1//Rd2 fällt auch in dieser Phase die Ausgangsspannung vout ab, so dass zusätzlich zur Spannung am Widerstand Rsh auch die Spannung am Widerstand Rb1 das Mischsignal am Schaltungspunkt Pinsens beeinflusst. Während der Einschaltphase des Schalters S setzt sich das Mischsignal am Schaltungspunkt PINsens also aus dem sich zeitlich kaum verändernden Anteil der Ausgangsspannung vout (gemessen über dem Spannungsteiler Rb1//Rd2) und der Spannung entsprechend dem ansteigenden Strom ishunt zusammen. Unter Beachtung der während der Phase des geöffneten Schalters S ermittelten Ausgangsspannung vout kann somit der Strom ishunt (entspricht dem Strom ichoke) bestimmt werden. Die Bestimmung und Auswertung des Stromes ishunt kann auch unter Auswertung des Anstieges des Mischsignals Pinₛₑₙₛ während der Einschaltphase des Schalters S erfolgen.

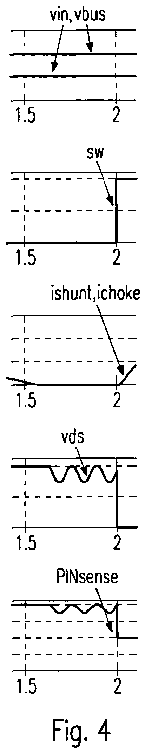

Die Figur 4 zeigt im Detail die Signalverläufe in der Phase nachdem die Induktivität L entmagnetisiert ist und die Diode D in den nicht-leitenden Zustand gewechselt, also gesperrt hat. In dieser Phase fließt kein Strom mehr durch die Induktivität L, da diese entmagnetisiert ist und ihre zwischengespeichert Energie abgegeben hat. Auch durch den Schalter S fließt kein Strom, da dieser noch geöffnet ist. Somit fließt auch kein Strom durch den Widerstand Rsh und es fällt somit auch keine (signifikante) Spannung über diesem Widerstand Rsh ab. Wie bereits oben beschrieben ist in dieser Phase die Spannung über dem Spannungsteiler Rb1//Rd2 die bestimmende Größe für das Mischsignal und das Mischsignal PINsens folgt der Ausgangsgleichspannung vout, die in diesem Zeitbereich (tgap) ausgewertet werden kann.

Die Eingangsgleichspannung vin wird bei dieser Schaltung nicht gemessen, obwohl sie zur Berechnung der Einschaltzeit ton oder zumindest eine Information über die Höhe oder Art der Eingangsspannung für andere Funktionen wie der Senkung der THD (Reduktion der Oberwellen) oder eine Erkennung eines Notlichtbetriebes notwendig sein kann. Die Eingangsgleichspannung vin kann aber berechnet werden, und zwar aufgrund der Auswertung der Werte der Ein- und Ausschaltzeiten sowie des aktuellen Messwertes der Ausgangsgleichspannung (vorzugsweise findet eine Auswertung des zeitlichen Verlaufs der Werte und / oder ein Vergleich mit gespeicherten Werten statt). Genaueres hierzu ist in der DE 10 2004 025 597 A1 beschrieben, auf die hiermit ausdrücklich Bezug genommen wird.

Es sei darauf hingewiesen, dass der Widerstand Rd2 nicht zwingend erforderlich ist. Bei entsprechender Auslegung des Verbindungswiderstandes RI kann auf den Widerstand Rd2verzichtet werden, und der hochohmige Verbindungswiderstand RI (zusammen mit dem niederohmigen Widerstand Rsh) bildet den unteren Widerstand der Spannungsteiler Rd1//RI bzw. Rb1//RI anstelle der Spannungsteiler Rd1//Rd2 bzw. Rb1//Rd2.

Abschließend sei noch darauf hingewiesen, dass die Messung der Ausgangsgleichspannung vout in einem Betrieb mit sehr niedriger Last oder im abgeschalteten Zustand vorteilhafterweise in einem "shutdown-with-burst"-Modus erfolgen sollte, d.h. mit möglichst kurzer Einschaltzeit ton und möglichst langer Ausschaltzeit toff, um den Energie-Transfer möglichst gering zu halten.

## Patentansprüche

1. Verfahren zur Leistungsfaktorkorrektur für einen Wechselspannungs-/Gleichspannungs-Wandler, bei dem eine Gleichspannung oder gleichgerichtete Eingangswechselspannung (vin) eine Induktivität (L) speist,
die Induktivität (L) wiederholt mittels eines durch eine Steuereinheit (PFC) getakteten Schalters (S) durch Schließen und Öffnen desselben auf- und entmagnetisiert wird, und
der Entladestrom der Induktivität (L) über eine Diode(D) dem Ausgang des Wandlers zugeführt wird, wobei bei geöffnetem Schalter (S) an einem gemeinsamen, mit der Steuereinheit (PFC) verbundenen Messpunkt (PINsens) die Spannung (vout) am Ausgang und der Zeitpunkt des Erreichens der Nulllinie des Entladestroms der Induktivität (L) direkt oder indirekt gemessen werden, und
wobei der gemeinsame Messpunkt (PINsens) über wenigstens einen Widerstand (Rd1) mit einem Abgriffspunkt verbunden ist, der zwischen der Induktivität (L) und der Diode (D) liegt und wobei der gemeinsame Messpunkt (Pinₛₑₙₛ) zusätzlich mit wenigstens einem weiteren Widerstand (Rbl) mit einem weiteren Abgriffspunkt verbunden ist, der auf der Ausgangsseite der Diode (D) liegt.

2. Verfahren nach einem der vorhergehenden Ansprüche, bei dem der Zeitpunkt des Einschaltens des Schalters (S) zeitlich nach dem Erreichen der Nulllinie durch den Entladestrom liegt.

3. Verfahren nach einem der vorhergehenden Ansprüche, bei dem zur Feststellung des Zeitpunkts des Erreichens der Nulllinie des Entladestromes der Induktivität (L) bei geöffnetem Schalter (S) die Spannung an dem gemeinsamen Messpunkt (Pinₛₑₙₛ) eine signifikante Änderung zeigt.

4. Verfahren nach einem der vorher stehenden Ansprüche, bei dem die Eingangsspannung (vin) des Wandlers aufgrund der überwachten und gemessenen Parameter sowie der Ein- und/oder Ausschaltzeiten des Schalters (S) rechnerisch ermittelt wird, oder an einem weiteren Messpunkt erfasst wird, der ebenfalls mit der Steuereinheit (PFC) verbunden ist.

5. Verfahren nach einem der vorher stehenden Ansprüche, bei dem die Messung der Ausgangsgleichspannung (vout) im shutdown-with-burst-Modus erfolgt, bei dem die Einschaltzeit (ton) für den Schalter (S) so kurz und die Ausschaltzeit (toff) so lang wie möglich gewählt werden, so dass praktisch keine Energietransport erfolgt.

6. Integrierte Schaltung, insbesondere ASIC, Mikrokontroller oder Hybridtechnik, die zur Ausführung eines Verfahrens nach einem der vorhergehenden Ansprüche ausgelegt ist.

7. Betriebsgerät für Leuchtmittel, aufweisend eine Schaltung nach Anspruch 6.

8. Leuchte, aufweisend ein Betriebsgerät nach Anspruch 7 sowie ein oder mehrere angeschlossene Leuchtmittel, wie Gasentladungslampen, LEDs oder OLEDs.

9. Leistungsfaktorkorrektur-Schaltung für einen Wechselspannungs-/Gleichspannungs-Wandler,
bei dem eine Gleichspannung oder gleichgerichtete Eingangswechselspannung (vin) eine Induktivität (L) speist,
die Induktivität (L) wiederholt mittels eines durch eine Steuereinheit (PFC) getakteten Schalters (S) durch Schließen und Öffnen desselben auf- und entmagnetisiert wird, und
der Entladestrom der Induktivität (L) über eine Diode(D) dem Ausgang des Wandlers zugeführt wird, wobei bei geöffnetem Schalter (S) an einem gemeinsamen, mit der Steuereinheit (PFC) verbundenen Messpunkt (PINsens) die Spannung (vout) am Ausgang und der Zeitpunkt des Erreichens der Nulllinie des Entladestroms der Induktivität (L) direkt oder indirekt gemessen werden, und
wobei der gemeinsame Messpunkt (PINsens) über wenigstens einen Widerstand (Rd1) mit einem Abgriffspunkt verbunden ist, der zwischen der Induktivität (L) und der Diode (D) liegt **dadurch gekennzeichnet, dass** der gemeinsame Messpunkt (Pinsens) zusätzlich mit wenigstens einem weiteren Widerstand (Rb1) mit einem weiteren Abgriffspunkt verbunden ist, der auf der Ausgangsseite der Diode (D) liegt.

10. Leistungsfaktorkorrektur-Schaltung nach Anspruch 9,
bei der der Zeitpunkt des Einschaltens des Schalters (S) zeitlich nach dem Erreichen der Nullinie durch den Entladestrom liegt.

11. Leistungsfaktorkorrektur-Schaltung nach einem der Ansprüche 9 oder 10,
bei der zur Feststellung des Zeitpunkts des Erreichens der Nulllinie des Entladestromes der Induktivität (L) bei geöffnetem Schalter (S) die Spannung an dem gemeinsamen Messpunkt (Pinₛₑₙₛ) eine signifikante Änderung zeigt.

12. Leistungsfaktorkorrektur-Schaltung nach einem der Ansprüche 9 bis 11,
bei der die Eingangspannung (vin) des Wandlers aufgrund der überwachten und gemessenen Parameter sowie der Ein- und/oder Ausschaltzeiten des Schalters (S) rechnerisch ermittelt wird, oder an einem weiteren Messpunkt erfasst wird, der ebenfalls mit der Steuereinheit (PFC) verbunden ist.

13. Leistungsfaktorkorrektur-Schaltung nach einem der Ansprüche 9 bis 12,
bei der die Messung der Ausgangsgleichspannung (vout) im shutdown-with-burst-Modus erfolgt, bei dem die Einschaltzeit (ton) für den Schalter (S) so kurz und die Ausschaltzeit (toff) so lang wie möglich gewählt werden, so dass praktisch keine Energietransport erfolgt.

14. Leistungsfaktorkorrektur-Schaltung nach einem der Ansprüche 9 bis 13,
bei der ein Spannungsteiler (Rd1, Rd2) vorgesehen ist, der sich zwischen dem Verbindungspunkt von der Induktivität (L) und der Diode (D) einerseits und einem Bezugspotentialpunkt (Masse) andererseits erstreckt,
und dass der Mittenabgriff des Spannungsteilers (Rd1, Rd2) an den mit der Steuereinheit (PFC) verbundenen Nesspunkt (Pin_{SENS}) geführt ist.

15. Leistungsfaktorkorrektur-Schaltung nach Anspruch 14,
bei der der Schalter (S) einerseits mit der Induktivität (L) und anderseits über einen Messwiderstand (Rsh) mit dem Bezugspotentialpunkt (Masse) verbunden ist, und dass der Mittenabgriff des Spannungsteilers (Rd1, Rd2) und der Verbindungspunkt zwischen dem Schalter (S) und dem Messwiderstand (Rsh) über einen Verbindungswiderstand (RI) verbunden sind.

## Claims

1. A method for correcting a power factor in an alternating current/direct current converter in which a direct current or rectified alternating current input voltage (VIN) feeds an inductor (L), the inductor (L) is repeatedly magnetized and demagnetized by means of a switch (S) clocked by a control unit (PFC) by closing and opening the switch, and the discharge current of the inductor (L) is fed by means of a diode (D) to the output of the converter, wherein when the switch (S) is open at a common measurement point (PINsens) connected to the control unit (PFC) the voltage (vout) at the output and the point in time at which the zero line of the discharge current of the inductor (L) is reached are directly or indirectly measured, and wherein the common measurement point (PINsens) is connected via at least one resistor (Rd1) with a tap point, which is located between the inductor (L) and the diode (D) and wherein the common measurement point (PINsens), is additionally connected with at least one further resistor (Rb1) with a further tap point, which is on the output side of the diode (D).

2. A method according to one of the preceding claims, in which the point in time of the switch-on of the switch (S) is chronologically after the zero line is reached by the discharge current.

3. A method according to one of the preceding claims, in which for the determination of the point in time at which the zero line of the discharge current of the inductor (L) is reached when the switch (S) is open the voltage shows a significant change at the common measurement point (PINsens).

4. A method according to one of the preceding claims, in which the input voltage (vin) of the converter is determined by way of calculation on the basis of the monitored and measure parameters as well as the switch-on and/or switch-off times of the switch (S), or is detected at a further measurement point, which is also connected with the control unit (PFC).

5. A method according to one of the preceding claims, in which the measurement of the direct current output voltage (vout) occurs in the shutdown-with-burst-mode, in which the switch-on time (ton) for the switch (S) is selected as short and the switch-off time (toff) is selected as long as possible, so that practically no energy transport takes place.

6. An integrated circuit, in particular, ASIC, microcontroller or hybrid technology, which is designed for the implementation of a method according to one of the preceding claims.

7. An operating device for lamps, having a circuit according to Claim 6.

8. A luminaire, having an operating device according to Claim 7 as well as one or several connected lamps, such as gas discharge lamps, LEDs or OLEDs.

9. A power factor correcting circuit for an alternating current/direct current converter, in which a direct current or rectified alternating current input voltage (VIN) feeds an inductor (L), the inductor (L) is repeatedly magnetized and demagnetized by means of a switch (S) clocked by a control unit (PFC) by closing and opening the switch, and the discharge current of the inductor (L) is fed by means of a diode (D) to the output of the converter, wherein when the switch (S) is open at a common measurement point (PINsens) connected to the control unit (PFC) the voltage (vout) at the output and the point in time at which the zero line of the discharge current of the inductor (L) is reached are directly or indirectly measured, and
wherein the common measurement point (PINsens) is connected via at least one resistor (Rd1) with a tap point, which is located between the inductor (L) and the diode (D), **characterized in that** the common measurement point (PINsens), is additionally connected with at least one further resistor (Rb1) with a further tap point, which is on the output side of the diode (D).

10. A power factor correcting circuit according to Claim 9,
wherein the point in time of the switch-on of the switch (S) is chronologically after the zero line is reached by the discharge current.

11. A power factor correcting circuit according to one of Claims 9 or 10,
In which for the determination of the point in time at which the zero line of the discharge current of the inductor (L) is reached when the switch (S) is open the voltage shows a significant change at the common measurement point (PINsens).

12. A power factor correcting circuit according to one of Claims 9 to 11,
in which the input voltage (vin) of the converter is determined by way of calculation on the basis of the monitored and measure parameters as well as the switch-on and/or switch-off times of the switch (S), or is detected at a further measurement point, which is also connected with the control unit (PFC).

13. A power factor correcting circuit according to one of Claims 9 to 12,
in which the measurement of the direct current output voltage (vout) occurs in the shutdown-with-burst-mode, in which the switch-on time (ton) for the switch (S) is selected as short and the switch-off time (toff) is selected as long as possible, so that practically no energy transport takes place.

14. A power factor correcting circuit according to one of Claims 9 to 13,
in which a voltage divider (Rd1, Rd2) is provided, which extends between the connection point of the inductor (L) and the diode (D), on the one hand, and a reference potential point (ground), on the other hand,
and that the center tap of the voltage divider (Rd1, Rd2) is led to the measurement point (PIN_{SENS}) connected with the control unit (PFC).

15. A power factor correcting circuit according to Claim 14,
in which the switch (S) is connected, on the one hand, with the inductor (L) and, on the other hand, via a measuring resistor (Rsh) with the reference potential point (ground), and that the center tap of the voltage divider (Rd1, Rd2) and the connection point between the switch (S) and the measuring resistor (Rsh) are connected via a connecting resistor (RI).

## Revendications

1. Procédé pour la correction du facteur de puissance pour un convertisseur de tension alternative/tension continue, dans lequel une tension continue ou une tension alternative d'entrée redressée (vin) alimente une inductance (L),
l'inductance (L) est magnétisée et démagnétisée de manière répétée au moyen d'un interrupteur (S) cadencé par une unité de commande (PFC) par fermeture et ouverture de celui-ci et
le courant de décharge de l'inductance (L) est introduit par l'intermédiaire d'une diode (D) au niveau de la sortie du convertisseur, moyennant quoi, lorsque l'interrupteur (S) est ouvert, la tension (vout) au niveau d'un point de mesure (PINsens) commun relié à l'unité de commande (PFC) et le moment où la ligne zéro du courant de décharge de l'inductance (L) est atteinte sont mesurés directement ou indirectement et
le point de mesure commun (PINsens) étant relié, par l'intermédiaire d'au moins une résistance (Rd1), avec un point de prélèvement, qui se trouve entre l'inductance (L) et la diode (D) et le point de mesure commun (PINsens) étant en outre relié, par l'intermédiaire d'au moins autre résistance (Rb1), avec un autre point de prélèvement, qui se trouve du côté de la sortie de la diode (D).

2. Procédé selon l'une des revendications précédentes, dans lequel le moment de mise en marche de l'interrupteur (S) se trouve chronologiquement après que le courant de décharge ait atteint la ligne zéro.

3. Procédé selon l'une des revendications précédentes, dans lequel, pour la détermination du moment où le courant de décharge de l'inductance (L) atteint la ligne zéro lorsque l'interrupteur (S) est ouvert, la tension au niveau du point de mesure commun (PINₛₑₙₛ) présente une variation significative.

4. Procédé selon l'une des revendications précédentes, dans lequel la tension d'entrée (vin) du convertisseur est déterminée par calcul sur la base des paramètres surveillés et mesurés ainsi que des temps de mise en marche et/ou d'arrêt de l'interrupteur (S) ou est mesurée au niveau d'un autre point de mesure qui est également relié à l'unité de commande (PFC).

5. Procédé selon l'une des revendications précédentes, dans lequel la mesure de la tension continue de sortie (vout) a lieu en mode « shutdown with burst » (arrêt avec rafale), dans lequel le temps de mise en marche (ton) pour l'interrupteur (S) est choisi aussi court que possible et le temps d'arrêt (toff) est choisi aussi long que possible, de façon à ce que pratiquement aucun transport d'énergie n'ait lieu.

6. Circuit intégré, plus particulièrement ASIC, micro-contrôleur ou technologie hybride, qui est conçu pour la réalisation d'un procédé selon l'une des revendications précédentes.

7. Appareil d'exploitation pour moyen d'éclairage, comprenant un circuit selon la revendication 6.

8. Luminaire, comprenant un appareil d'exploitation selon la revendication 7 ainsi qu'un ou plusieurs moyens d'éclairage connectés, comme des lampes à décharge de gaz, des LED ou des OLED.

9. Circuit de correction du facteur de puissance pour un convertisseur tension alternative/tension continue, dans lequel une tension continue ou une tension alternative d'entrée redressée (vin) alimente une inductance (L),
l'inductance (L) est magnétisée et démagnétisée de manière répétée au moyen d'un interrupteur (S) cadencé par une unité de commande (PFC) par fermeture et ouverture de celui-ci et
le courant de décharge de l'inductance (L) est introduit par l'intermédiaire d'une diode (D) au niveau de la sortie du convertisseur, moyennant quoi, lorsque l'interrupteur (S) est ouvert, la tension (vout) au niveau d'un point de mesure (PINsens) commun relié à l'unité de commande (PFC) et le moment où la ligne zéro du courant de décharge de l'inductance (L) est atteinte sont mesurés directement ou indirectement et
le point de mesure commun (PINsens) étant relié, par l'intermédiaire d'au moins une résistance (Rd1), avec un point de prélèvement, qui se trouve entre l'inductance (L) et la diode (D) **caractérisé en ce que** le point de mesure commun (PINsens) est en outre relié, par l'intermédiaire d'au moins une autre résistance (Rb1), avec un autre point de prélèvement, qui se trouve du côté de la sortie de la diode (D).

10. Circuit de correction de facteur de puissance selon la revendication 9,
dans lequel le moment de mise en marche de l'interrupteur (S) se trouve chronologiquement après le moment où le courant de décharge atteint la ligne zéro.

11. Circuit de correction de facteur de puissance selon l'une des revendications 9 ou 10,
dans lequel, pour la détermination du moment où le courant de décharge de l'inductance (L) atteint la ligne zéro, lorsque l'interrupteur (S) est ouvert, la tension au niveau du point de mesure commun (Pinₛₑₙₛ) présente une variation significative.

12. Circuit de correction de facteur de puissance selon l'une des revendications 9 à 11,
dans lequel la tension d'entrée (vin) du convertisseur est par calcul sur la base des paramètres surveillés et mesurés ainsi que des temps de mise en marche et/ou d'arrêt de l'interrupteur (S) ou est mesurée au niveau d'un autre point de mesure qui est également relié à l'unité de commande (PFC).

13. Circuit de correction de facteur de puissance selon l'une des revendications 9 à 12,
dans lequel la mesure de la tension continue de sortie (vout) a lieu en mode « shutdown with burst » (arrêt avec rafale), dans lequel le temps de mise en marche (ton) pour l'interrupteur (S) est choisi aussi court que possible et le temps d'arrêt (toff) est choisi aussi long que possible, de façon à ce que pratiquement aucun transport d'énergie n'ait lieu.

14. Circuit de correction de facteur de puissance selon l'une des revendications 9 à 13,
dans lequel un diviseur de tension (Rd1, Rd2) est prévu, qui s'étend entre le point de liaison de l'inductance (L) et la diode (D) d'une part et un point de potentiel de référence (masse) d'autre part,
et en ce que le prélèvement central du diviseur de tension (Rd1, Rd2) est guidé au niveau du point de mesure (Pinₛₑₙₛ) relié à l'unité de commande (PFC).

15. Circuit de correction de facteur de puissance selon la revendication 14,
dans lequel l'interrupteur (S) est relié d'une part avec l'inductance (L) et d'autre part par l'intermédiaire d'une résistance de mesure (Rsh) avec le point de potentiel de référence (masse) et en ce que le prélèvement central du diviseur de tension (Rd1, Rd2) et le point de liaison entre l'interrupteur (S) et la résistance de mesure (Rsh) sont reliés par l'intermédiaire d'une résistance de liaison (RI).
